# EUROPÄISCHE PATENTANMELDUNG

(11) **EP 1 400 882 A2**
(43) Veröffentlichungstag der Anmeldung: **24.03.2004**
(21) Anmeldenummer: 03020279.0
(22) Anmeldetag: 08.09.2003
(51) Int. Cl.: G05B 19/418

(54) **Vorrichtung zur Automatisierung und/oder Steuerung von Werkzeug-oder Produktionsmaschinen**

(30) Priorität: 20.09.2002 DE 10243771
(71) Anmelder: SIEMENS AKTIENGESELLSCHAFT, 80333 München (DE)
(72) Erfinder: Reimann, Jürgen-Andreas, 91074 Herzogenaurach (DE)

(57) **Zusammenfassung**

Die Erfindung betrifft eine Vorrichtung zur Automatisierung und/oder Steuerung von Werkzeug- oder Produktionsmaschinen, wobei mindestens ein von mindestens einer Maschine (3a,3b) örtlich entfernter Rechner (1) über mindestens ein Bussystem (2) mit jeder Maschine (3a,3b) zum uni- oder bidirektionalen Daten- und Steuerverkehr miteinander verbindbar ist, wobei alle Steuerungsfunktionen der Maschine (3a, 3b) in den mindestens einen örtlich entfernten Rechner (1) integrierbar sind. Die Vorrichtung ermöglicht somit eine einfache und kostengünstige Möglichkeit zur Automatisierung und/oder Steuerung von Werkzeug- oder Produktionsmaschinen.

## Beschreibung

Vorrichtung zur Automatisierung und/oder Steuerung von Werkzeug- oder Produktionsmaschinen

Die Erfindung bezieht sich auf eine Vorrichtung zur Automatisierung und/oder Steuerung von Werkzeug- oder Produktionsmaschinen, wobei mindestens ein von mindestens einer Maschine örtlich entfernter Rechner über mindestens ein Bussystem mit jeder Maschine zum uni- oder bidirektionalen Daten- und Steuerverkehr miteinander verbindbar ist.

Die Technik des direkten Datenaustauschs zwischen Werkzeugoder Produktionsmaschinen, wobei unter Produktionsmaschinen auch Roboter zu verstehen sind und einem übergeordneten Rechner ist seit ihrer ersten Nutzung ständig weiterentwickelt worden. Maschinen müssen zunehmend intelligenter werden, um eine möglichst hohe Produktivität zu erreichen. Die Forderung nach höhere Produktivität wird durch eine entsprechende Automatisierungs- und Steuerungstechnik erfüllt. Anstelle der früher üblichen zentralen Systeme haben sich zunehmend dezentrale Systeme durchgesetzt, wobei ein Automatisierungs- und Steuersystem je Maschine über Bussysteme mit den verschiedenen Komponenten der Maschine kommuniziert. Ein weiterer Schritt zur höheren Produktivität war der Einsatz von Kommunikationseinrichtungen, welche die Maschinen untereinander und mit einem Leitsystem verbindet.

Eine Vorrichtung der eingangs genannten Art zeigt das "MC-CNC-Handbuch", Hans B. Kief, 1995/96, Karl Hansa-Verlag, München, Wien, Seite 416 ff.. Unter DNC versteht man eine Betriebsart bei dem mehrere NC/CNC-Maschinen und/oder Produktionsmaschinen an einen gemeinsamen Zentralrechner angeschlossen sind. Nach dem heute praktizierten DNC-Konzept werden die Steuerfunktionen der einzelnen Maschinen komplett auf der internen Hardware der jeweiligen Maschine berechnet. Bei der älteren, ursprünglichen Idee des DNC-Konzepts verbleibt eine Rumpfsteuerung in jeder Maschine. Der Zentralrechner übernimmt bei diesem DNC-Konzept eine Vorbereitung oder Aufbereitung der Daten für die Rumpfsteuerung.

Der Erfindung liegt die Aufgabe zugrunde, eine einfache und kostengünstige Vorrichtung zur Automatisierung und/oder Steuerung von Werkzeug- oder Produktionsmaschinen zu schaffen.

Diese Aufgabe wird für eine Vorrichtung der eingangs genannten Art dadurch gelöst, dass alle Steuerungsfunktionen der Maschine in den mindestens einen örtlich entfernten Rechner integrierbar sind.

Eine erste vorteilhafte Ausbildung der Erfindung ist dadurch gekennzeichnet, dass als Bussystem ein Ethernet Bussystem verwendbar ist. Ein Ethernet Bussystem zeichnet sich durch eine besonders hohe Datendurchsatzrate aus.

Eine weitere vorteilhafte Ausgestaltung der Erfindung ist dadurch gekennzeichnet, dass das Bussystem redundant ausführbar ist. Hierdurch wird eine besonders hohe Verfügbarkeit der Vorrichtung sichergestellt.

Eine weitere vorteilhafte Ausgestaltung der Erfindung ist dadurch gekennzeichnet, dass als Rechner ein Personalcomputer oder eine Workstation verwendbar ist. Die Verwendung von Personal- oder Workstationen erlaubt eine besonders preisgünstige Realisierung der Vorrichtung.

Ferner erweist es sich als vorteilhaft, dass jeweils auf einem Rechner die Steuerungsfunktion mehrerer Maschinen parallelprozessig abarbeitbar sind. Die Verwendung nur eines Rechners zur Steuerung mehrerer Maschinen erlaubt eine besonders kostengünstige Realisierung der Vorrichtung.

Eine weitere vorteilhafte Ausgestaltung der Erfindung ist dadurch gekennzeichnet, dass die Abarbeitung der Steuerungsfunktion auf mehrere Rechner verteilbar ist. Sollen die Steuerungsfunktionen einer großen Anzahl von Maschinen zentral ablaufen, so kann es notwendig werden, falls ein Rechner mit dieser Aufgabe überfordert ist, die zahlreichen Steuerungsfunktion auf mehrere Rechner parallelprozessig zu verteilen.

Eine weitere vorteilhafte Ausgestaltung der Erfindung ist dadurch gekennzeichnet, dass die Maschine mit einem UltraThinClient ohne eigene Intelligenz versehbar ist. Soll an der Maschine eine Vorortbedienung möglich sein, so bietet sich der Einsatz eines UltraThinClient ohne eigene Intelligenz an, der die Eingaben des Bedieners in Bustelegramme umwandelt und die ankommenden Telegramme mit den Anzeigeinformation (z.B. die Pixeldaten für einen Monitor) entgegennimmt.

Ferner erweist es sich als vorteilhaft, dass zur Energieversorgung der Maschinen eine zentrale elektrische Einspeisevorrichtung vorsehbar ist. Im Rahmen der erfindungsgemäßen Vorrichtung bietet es sich an, die normalerweise maschinenbezogenen Einspeisevorrichtungen von mehreren Maschinen zu einer zentralen elektrischen Einspeisevorrichtung zusammenzufassen um hierdurch eine Kostensenkung zu erzielen.

Ein Ausführungsbeispiel der Erfindung ist in der Zeichnung dargestellt und wird im folgenden näher erläutert. Dabei zeigen:
FIG 1 ein Blockschaltbild der erfindungsgemäßen Vorrichtung und
FIG 2 die Softwarearchitektur des Rechners.

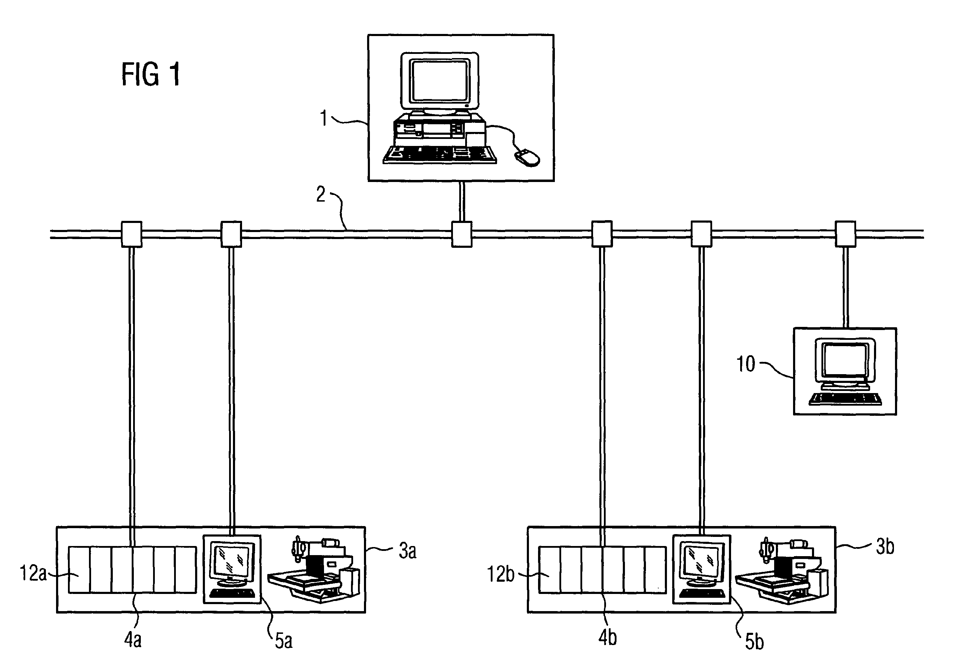

In einem Blockschaltbild gemäß FIG 1 ist ein von den Maschinen 3a und 3b örtlich entfernter Rechner 1 über ein Bussystem 2 mit der Maschine 3a und der Maschine 3b verbunden. Mit Hilfe eines Bussystems 2 findet ein uni- oder bidirektionaler Daten- und Steuerverkehr zwischen dem Rechner 1 und den Maschinen 3a und 3b statt. In die Maschine 3a ist eine E/A-Einheit (Ein/Ausgabe-Einheit) 4a, welche mehrere E/A-Module umfasst, von denen der Übersichtlichkeit halber nur ein E/A-Modul 12a beziffert ist und ein UltraThinClient 5a integriert. Jeweils ein E/A-Modul ist direkt mit den Sensoren und Aktoren der Maschine 3a verbunden. Unter Sensoren sind hierbei z.B. Drehgeber, Lineargeber, Beschleunigungssensoren, Schalter, Kontakte bzw. allgemein Messsysteme zu verstehen. Unter Aktoren sind z.B. die Abtriebe der Maschine zu verstehen. In die Maschine 3b ist eine entsprechende E/A-Einheit 4b, welche mehrere entsprechende E/A-Module umfasst, von denen der Übersichtlichkeit halber nur ein E/A-Modul 12b beziffert ist und ein entsprechender UltraThinClient 5b integriert. Selbstverständlich weist die Maschine 3a und 3b auch noch andere Komponenten auf, die jedoch für das Verständnis der Erfindung nur eine nachrangige Rolle spielen und deshalb der Übersichtlichkeit halber nicht dargestellt sind.

Die gesamte Intelligenz der gezeigten Anordnung inklusive der Steuerungssoftware, für z.B. die Achsenbewegungen der Maschinen, befindet sich im Rechner 1. Dieser ist über das Bussystem 2 und die E/A-Einheiten 4a und 4b mit den Sensoren und Aktoren der Maschine 3a bzw. 3b verbunden. Ein Sensorsignal, z.B. der Maschine 3a wird, vorausgesetzt, das Bussystem 2 verfügt über eine entsprechend hohe Datendurchsatzrate, fast unverzögert an den Rechner 1 übermittelt und in den Steuerungs- und Regelfunktionen des Rechners 1 weiter verarbeitet. Gegebenenfalls wird anschließend vom Rechner 1 ein entsprechendes Steuersignal über das Bussystem 2 und die E/A-Einheiten 4a und 4b an die Aktoren der Maschinen 3a bzw. 3b übermittelt.

Das Bussystem 2 muss wie bereits schon vorher erwähnt eine hohe Datendurchsatzrate besitzen. In der Praxis bewert hat sich hier das Ethernet-Bussystem, wobei es für diesen Anwendungsfall naheliegend ist, diesen Bus doppelt zu verlegen. Ein Bus für die Sensoren und Aktoren der Maschine, hier steht die Echtzeitfähigkeit im Vordergrund und ein zweiter für die Bedienung, hier steht die Übertragung vieler Daten im Vordergrund. Da das Bussystem 2 bei der erfindungsgemäßen Vorrichtung essenzieller Bestandteil der Steuerung der Maschinen ist, ist es der höheren Verfügbarkeit wegen sinnvoll, das Bussystem 2 gegebenenfalls auch redundant auszulegen.

Für eine eventuell gewünschte Vorortbedienung können sogenannte UltraThinClients 5a und 5b Verwendung finden, die über keine eigene Intelligenz verfügen, sondern nur die Eingaben des Bedieners in Bustelegramme umwandeln und die ankommenden Telegramme wie Anzeigeinformationen (z.B. die Pixeldaten für den Monitor) entgegennehmen. Mit Hilfe eines eventuell zusätzlich vorhandenen Terminals 10, der von den Maschinen 3a und 3b und dem Rechner 1 örtlich entfernt stehen kann und im wesentlichen ebenfalls in Form eines UltraThinClient 5a oder 5b ausgeführt sein kann, können Prozessdaten visualisiert und verändert werden bzw. auf Daten und Programme im Rechner 1 zugegriffen werden.

In dem in FIG 1 gezeigten Blockschaltbild wird beispielhaft von zwei Maschinen 3a und 3b und einem Rechner 1 ausgegangen. Prinzipiell sind jedoch Ausführungsformen mit beliebig vielen Maschinen denkbar. Sollte die Rechenleistung eines einzelnen Rechners 1 nicht ausreichend sein, so können auch mehrere Rechner zur Steuerung der Maschinen an das Bussystem 2 angeschlossen werden, auf denen parallelprozessig die Abarbeitung der Steuerungsfunktionen erfolgt.

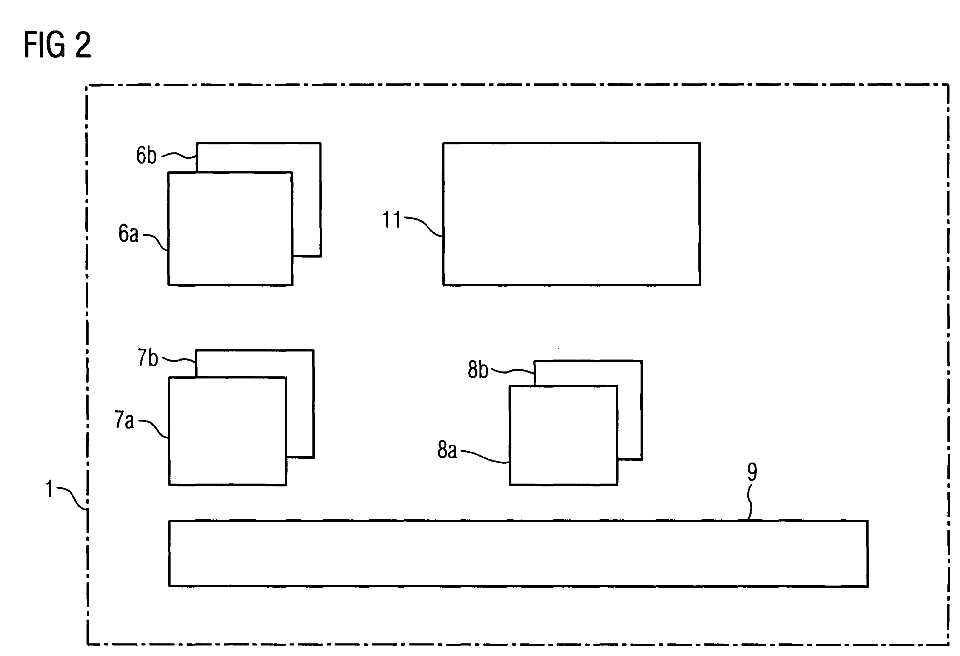

In einem Blockschaltbild gemäß FIG 2 ist die Softwarestruktur des Rechners 1 dargestellt. In FIG 2 ist dabei beispielhaft eine Ausführungsform für zwei Maschinen 3a und 3b und einem Rechner 1 gemäß FIG 1 dargestellt. Dieser wird von einem Betriebssystem 9 verwaltet. Für jede Maschine 3a und 3b existiert in der Software ein der jeweiligen Maschine zugeordneter HMI-Server (Human Maschine Interface-Server) 6a bzw. 6b, ein Steuerungsfunktionsprogramm 7a bzw. 7b und ein Werkstückprogramm 8a bzw. 8b. Entsprechend dem in FIG 2 dargestellten Ausführungsbeispiel ist der HMI-Server 6a, das Steuerungsfunktionsprogramm 7a und das Werkstückprogramm 8a der in FIG 1 gezeigten Maschine 3a zugeordnet. Der HMI-Server 6b, das Steuerungsfunktionsprogramm 7b und das Werkstückprogramm 8b ist der in FIG 1 gezeigten Maschine 3b zugeordnet. Ein Prozesssteuerungsprogramm 11 übernimmt die Steuerung eines übergeordneten Gesamtprozesses zwischen den Maschinen 3a und 3b. Der HMI-Server 6a bzw. 6b hat dabei die Aufgabe den ihm jeweilig zugeordneten auf der Maschine 3a bzw. 3b gemäß FIG 1 befindlichen UltraThinClient 5a bzw. 5b zu verwalten und zu steuern. Die Steuerung bzw. Regelung von z.B. NC/PLC (Numerical Control/Programmable Logic Control) geführten Achsenbewegungen der Maschine 3a bzw. 3b werden für jede Maschine separat in den entsprechenden zugeordneten Steuerungsfunktionsprogrammen 7a bzw. 7b durchgeführt.

Jeder Maschine 3a bzw. 3b ist ein Werkstückprogramm inklusive zugehöriger Daten (z.B. Werkzeugkorrekturdaten, Geometrie des Werkzeugs etc.) zugeordnet. Entsprechend ist der Maschine 3a das Werkstückprogramm 8a und der Maschine 3b das Werkstückprogramm 8b zugeordnet. Das Werkstückprogramm 8a berechnet z.B. ausgangsseitig die Sollachsenpositionen der Maschinenachsen, welche eingangsseitig vom Steuerungsfunktionsprogramm 7a eingelesen werden. Entsprechendes geschieht zwischen dem Werkstückprogramm 8b und dem Steuerungsfunktionsprogramm 7b.

Der Rechner 1 kann als normaler Standard Personal Computer ausgeführt sein, da solche Rechner heute schon eine sehr hohe Rechenleistung verfügen. Gegebenenfalls kann auch eine Workstation mit noch höherer Rechenleistung verwendet werden.

Innerhalb einer solchen zentralen Steuerungs- und Automatisierungsvorrichtung mit dezentralen E/A-Einheiten sinkt der Anteil der Automatisierungstechnik innerhalb einer Maschine beträchtlich. Infolge können z.B., in der unmittelbaren Umgebung der Maschinen aufgestellte, sogenannte Vor-Ort-Schaltschränke durch kleinere ersetzt werden oder ganz entfallen.

Dies wird insbesondere dadurch erreicht, dass bei der Automatisierungs- und Steuerungsvorrichtung, die Antriebskomponenten der Maschine prinzipiell dezentral anordnet werden können während die erforderlichen elektrischen Einspeisemodule für die Antriebskomponenten mehrerer Maschinen zu einer zentralen elektrischen Einspeisevorrichtung zusammenfasst werden können. Anstelle der heute üblichen Versorgung der Maschinen mit dreiphasigem Wechselstrom, wird die sogenannte Zwischenkreisspannung (typisch 600V Gleichstrom), die normalerweise in jeder Maschine aus dem Wechselstrom zur Energieversorgung der Antriebskomponenten gebildet wird, zu den Maschinen von der zentralen Einspeisevorrichtung direkt verlegt. Ein Zusatznutzen ergibt sich dabei dadurch, dass die Energie, die beispielsweise an einer Maschine durch Abbremsen einer Spindel frei wird, über einen elektrischen Umrichter direkt zum Betrieb der anderen Maschinen genutzt werden kann.

## Patentansprüche

1. Vorrichtung zur Automatisierung und/oder Steuerung von Werkzeug- oder Produktionsmaschinen, wobei mindestens ein von mindestens einer Maschine (3a,3b) örtlich entfernter Rechner (1) über mindestens ein Bussystem (2) mit jeder Maschine (3a, 3b) zum uni- oder bidirektionalen Daten- und Steuerverkehr miteinander verbindbar ist, **dadurch gekennzeichnet, dass** alle Steuerungsfunktionen der Maschine (3a,3b) in den mindestens einen örtlich entfernten Rechner (1) integrierbar sind.

2. Vorrichtung nach Anspruch 1, **dadurch gekennzeichnet, dass** als Bussystem (2) ein Ethernet Bussystem verwendbar ist.

3. Vorrichtung nach einem der vorhergehenden Ansprüche, **dadurch gekennzeichnet, dass** das Bussystem (2) redundant ausführbar ist.

4. Vorrichtung nach einem der vorhergehenden Ansprüche, **dadurch gekennzeichnet, dass** als Rechner (1) ein Personal Computer oder eine Workstation verwendbar ist.

5. Vorrichtung nach einem der vorhergehenden Ansprüche, **dadurch gekennzeichnet, dass** auf jeweils einem Rechner (1) die Steuerungsfunktionen mehrerer Maschinen (3a, 3b) parallelprozessig abarbeitbar sind.

6. Vorrichtung nach einem der vorhergehenden Ansprüche, **dadurch gekennzeichnet, dass** die Abarbeitung der Steuerungsfunktionen auf mehrere Rechner (1) verteilbar ist.

7. Vorrichtung nach einem der vorhergehenden Ansprüche, **dadurch gekennzeichnet, dass** die Maschine (3a, 3b) mit einem UltraThinClient (5a,5b) ohne eigene Intelligenz versehbar ist.

8. Vorrichtung nach einem der vorhergehenden Ansprüche, **dadurch gekennzeichnet, dass** zur Energieversorgung der Maschinen (3a,3b) eine zentrale elektrische Einspeisevorrichtung vorsehbar ist.
